# EUROPEAN PATENT SPECIFICATION

(11) **EP 4 015 908 B1**
(45) Date of publication and mention of the grant of the patent: **14.02.2024**
(21) Application number: 21214511.4
(22) Date of filing: 14.12.2021
(51) Int. Cl.: F23R 3/28, F02C 7/264, F23R 3/34

(54) **GAS TURBINE ENGINE COMBUSTOR WITH AXIALLY ORIENTED INTERNALLY MOUNTED CONTINUOUS IGNITION DEVICE WITH REVERSE FLOW AXIAL ORIENTATION**
GASTURBINENBRENNKAMMER MIT AXIAL AUSGERICHTETER, INTERN MONTIERTER DAUERZÜNDVORRICHTUNG MIT AXIAL UMGEKEHRTER STRÖMUNGSAUSRICHTUNG
CHAMBRE DE COMBUSTION DE MOTEUR DE TURBINE À GAZ AVEC DISPOSITIF D'ALLUMAGE CONTINU À ORIENTATION AXIALE ET À MONTAGE INTERNE À ORIENTATION AXIALE INVERSÉE

(30) Priority: 17.12.2020 US 202017125107
(43) Date of publication of application: 22.06.2022
(73) Proprietor: Collins Engine Nozzles, Inc., West Des Moines, IA 50265 (US)
(72) Inventor: RYON, Jason, Carlisle, IA (US); PROCIW, Lev Alexander, Johnston, IA (US); WILLIAMS, Brandon P., Johnston, IA (US)
(74) Representative: Dehns

(56) References cited:
- US-A- 3 009 321
- US-A- 4 412 414
- US-A1- 2014 366 505
- US-A1- 2018 003 388

## Description

### BACKGROUND

The present disclosure relates to gas turbine engines and, more particularly, to orientations of torch igniters used in the combustor section of a gas turbine engine.

Torch igniters can be used in lieu of spark igniters to provide an ignition source for combustors located in gas turbine engines. Torch igniters provide a flame as an ignition source for a combustor rather than the electric current provided by spark igniters. Torch igniters mounted externally to a high pressure case of the gas turbine engine must be able to withstand a high pressure differential to prevent leaks. Additionally, external mounting of torch igniters can be challenging due to other engine components which are also external to the high pressure case, such as fuel manifolds. Mounting torch igniters within the high pressure case does not require the torch igniters to withstand this high pressure differential and allows for improved positioning of the torch igniters.

Torch igniters for gas turbine engine combustors are described by documents US2014/365505 and US2018/003388.

### SUMMARY

According to the invention, the present specification provides a combustor of a gas turbine engine according to claim 1.

### BRIEF DESCRIPTION OF THE DRAWINGS

FIG. 1 is a cross-sectional view of an example of a torch igniter within the combustion section of a gas turbine engine.
FIG. 2 is a cross-sectional close-up view of an example of the torch igniter of FIG. 1.
FIG. 3 is a cross-sectional view of an example of a cap section of the torch igniter of FIGs. 1 and 2.
FIG. 4 is a cross-sectional view of an example of an elbow section of the torch igniter of FIGs. 1 and 2.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which also fall within the scope of the invention which is defined by the claims. The figures may not be drawn to scale, and applications and embodiments of the present invention may include features and components not specifically shown in the drawings.

### DETAILED DESCRIPTION

The present disclosure provides structures for a combustor of a gas turbine engine containing a torch igniter. The mounting of a torch igniter within the high-pressure section of a gas turbine engine prevents stress on the combustion chamber of the torch igniter while preventing damage to temperature-sensitive components of the torch igniter, and does not require the torch igniter to be built to withstand a high pressure differential.

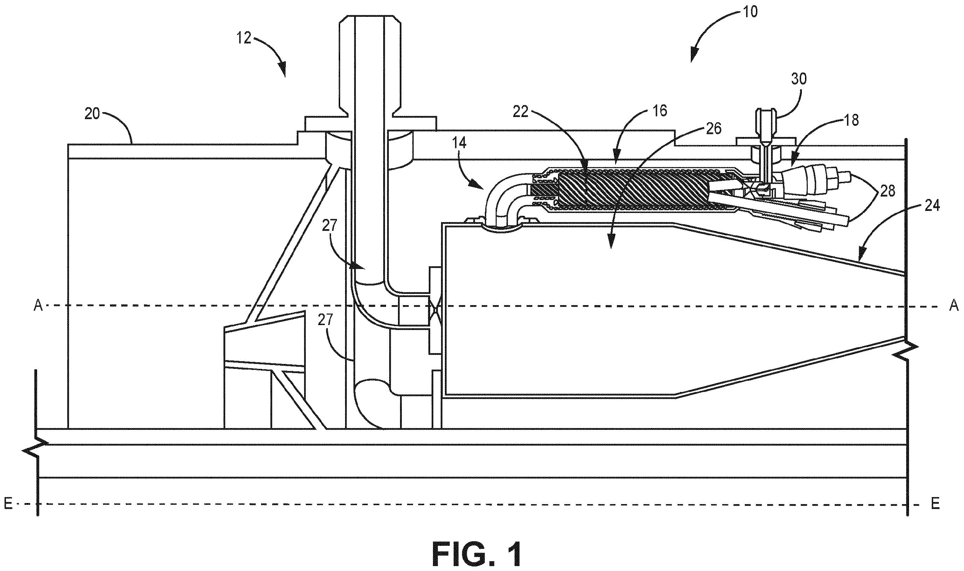

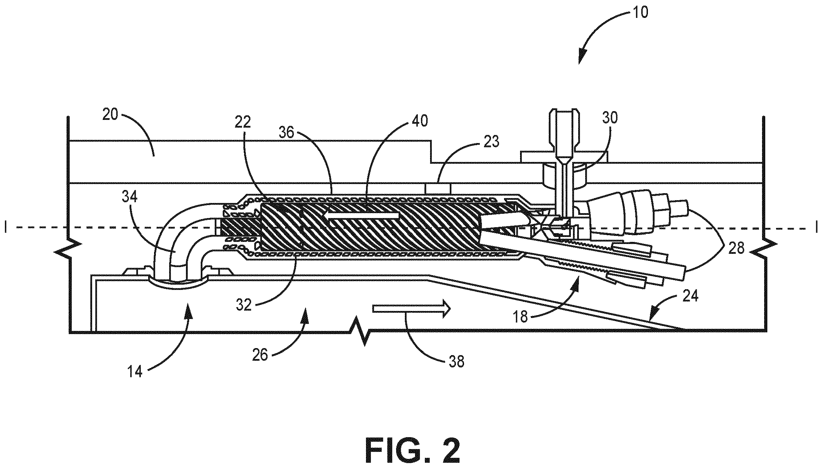

FIG. 1 is a cross-sectional view of torch igniter 10 disposed within engine combustor section 12 of a gas turbine engine. Torch igniter 10 is composed of tip 14, combustion section 16, and cap 18. Torch igniter 10 is situated within high pressure case 20 such that combustion chamber 22 is located fully within high pressure case 20. Torch igniter is secured to high pressure case 20 via support 23 (shown in FIG. 2). Tip 14 of torch igniter 10 is mounted through liner 24 of combustor 26. Fuel nozzles 27 provide fuel to combustor 26. The gas turbine engine is arranged such that high pressure case 20, liner 24, and combustor 26 are disposed circumferentially about engine axis E-E. Engine axis E-E is a rotational axis of the gas turbine engine. Primary combustor centerline A-A is a centerline for the two-dimensional cross section of engine combustor section 12 shown in FIG. 1. The example of torch igniter 10 in FIG. 1 is shown as receiving glow plugs 28. Glow plugs 28 are surface igniters which can be resistively heated to ignite fuel from fuel injector 30 and create combustion within torch igniter 10, creating a flame within combustion chamber 22. Torch igniter 10 intakes air from an inlet disposed in cap 18 of torch igniter 10. The air can be high-pressure air from the high-pressure section of the gas turbine engine. Combustion chamber 22 is in fluid communication with an internal volume of combustor 26 via an outlet within tip 14, allowing the flame created within combustion chamber 22 to reach the interior of combustor 26 and thereby ignite fuel within combustor 26. Torch igniter 10 can serve as an initial ignition mechanism for combustor 26, as a stabilizer of fuel combustion within combustor 26, or as a relight mechanism for combustor 26.

FIG. 2 is a cross-sectional view of torch igniter 10. Igniter wall 32 surrounds the internal volume of torch igniter 10, which includes combustion chamber 22 and outlet passage 34, such that igniter wall 32 runs from the end of tip 14 to cap 18. Igniter wall 32 can be annular where it surrounds combustion chamber 22 and outlet passage 34, and can be dome- or cone-shaped where it extends to cap 18. In the depicted example, igniter wall 32 has a larger diameter where it surrounds combustion chamber 22 than where it surrounds outlet passage 34. Structural wall 36 coaxially surrounds igniter wall 32, and can be separated from igniter wall 32 by cooling channels. Igniter wall 32 is shown transparent in the cross section of FIGs. 1 and 2 for ease of viewing. Structural wall 36 can be thinner than would be required of structural walls for torch igniters mounted externally to high pressure case 20, because torch igniter 10 does not need to withstand the pressure difference between the air inside high pressure case 20 and the air outside high pressure case 20. The construction of torch igniter 10 can therefore account for the pressure level within high pressure case 20, where the pressure difference between the internal volume of torch igniter 10 and the external surface of torch igniter 10 is much lower than for a torch igniter located outside a high pressure case.

Combustor flow direction 38 shows the general direction of flow for fluids within engine combustor section 12. Torch igniter 10 is arranged such that combustion section 16 and cap 18 are oriented coaxially about torch igniter axis I-I. In the depicted embodiment, torch igniter axis I-I is oriented approximately parallel to primary combustor centerline A-A. Igniter flow direction 40 shows the general direction of flow for fluids within combustion chamber 22 of torch igniter 10. Thus, torch igniter 10 has upstream and downstream ends oriented along torch igniter axis I-I and according to the direction of flow direction 40. Combustion chamber 22 and outlet passage 34 are fluidly connected such that combustion products are able to flow from combustion chamber 22 toward tip 14 and to outlet passage 34. Combustion products are able to exit torch igniter 10 and enter an internal volume of a main combustor, such as combustor 26, via outlet passage 34. To this extent, cap 18 is disposed at the upstream end of torch igniter 10 and tip 14 is disposed at the downstream end of torch igniter 10. It should be understood, however, that tip 14 can be disposed at any suitable location on the downstream end of torch igniter 10.

In the depicted embodiment, torch igniter 10 is situated axially downstream of fuel nozzle 27 with respect to primary combustor centerline A-A. Torch igniter 10 intakes air in the direction of igniter flow direction 40, which is approximately opposite the direction of air flow through engine combustor section 12. The orientation of torch igniter 10 downstream of fuel nozzle 27 allows for improved flexibility in positioning torch igniter 10 on liner 24. More generally, however, the direction of torch igniter 10 can be selected depending on space constraints within engine combustor section 12. Engine combustor section 12 experiences high temperatures during engine operation. Situating torch igniter 10 within high pressure case can increase the temperature of air that torch igniter 10 intakes through cap 18. The fuel-to-air ratio can be varied based on desired power and other factors.

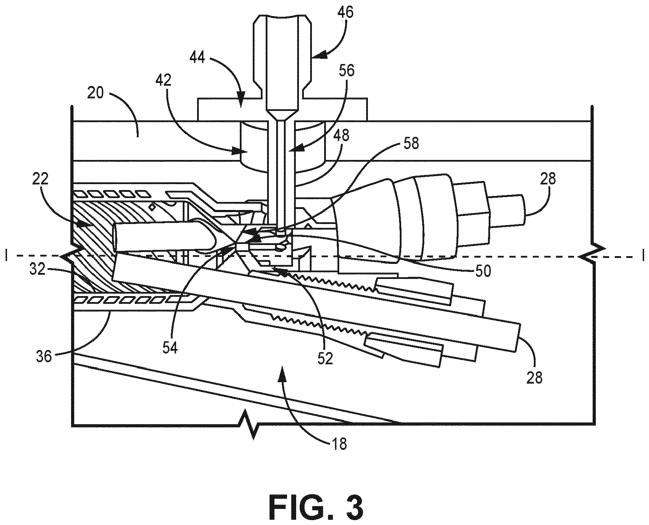

FIG. 3 is a cross-sectional view of cap 18 of torch igniter 10. During operation, torch igniter 10 causes combustion within combustion chamber 22 by using fuel injector 30 to inject a fuel-air mixture that impinges on the surface of glow plugs 28. Glow plugs 28 extend through cap 18, such that each glow plug 28 has an internal end and an external end with respect to torch igniter 10. Further, glow plugs 28 can be resistively heated such that they are able to ignite the fuel-air mixture injected by fuel injector 30.

Fuel injector 30 can be removably connected to torch igniter 10 through an aperture in cap 18. Fuel injector 30 is positioned through case opening 42 in high pressure case 20 and held in place within case opening 42 by flange 44. Bellows, coiled tubes, sliding O-rings, flexible components, or other suitable methods may be utilized to account for thermal growth tolerances in torch igniter 10, high pressure case 20, and/or fuel injector 30. Flange 44 can be secured to high pressure case 20 with connectors, such as bolts or screws, and creates a seal between fuel injector 30 and high pressure case 20. In some embodiments, additional sealing devices such as a C seal can be used to seal between flange 44 and high pressure case 20. Fuel injector 30 is composed of fuel inlet fitting 46, fuel injector feedarm 48, fuel prefilmer 50, and fuel distributer 52. Fuel injector 30 is connected to a fuel line (not depicted) via fuel inlet fitting 46. Fuel injector feedarm 48 extends from high pressure case 20 to aperture 54 within cap 18. Fuel injector feedarm 48 includes central passage 56 which provides a path for fuel to flow through fuel injector 30. Fuel injector 30 engages with seal 58 of cap 18. In the embodiment depicted in FIG. 2, seal 58 consists of a flared conical area. However, seal 58 can also consist of crush washers, metallic C seals, or another form of seal. Some embodiments can also include a separate air assist line to atomize fuel, which can enter into the fuel injector from a fitting located outside of the high pressure case. This line can be fed from an auxiliary high pressure compressor, or can be a high pressure line fed from the main compressor of the engine. In the depicted embodiment, fuel injector feedarm 48 includes a 90 degree turn to engage with seal 58. However, different embodiments are possible, such as embodiments with a turn at an angle other than 90 degrees or embodiments with a straight fuel injector feedarm which are axially loaded. Fuel injector 30 generally injects the fuel-air mixture in a conical volume centered on torch igniter axis I-I that impinges on the internal end of glow plugs 28.

In the depicted embodiment, torch igniter 10 is configured to receive three glow plugs 28. However, in other embodiments, torch igniter 10 can be configured to receive one glow plug 28, two glow plugs 28, or more than three glow plugs 28. It can be desirable for torch igniter 10 to be configured with multiple glow plugs at multiple locations within combustion chamber 22 to improve ignition of fuel injected by fuel injector 30. Further, if the injection pattern of fuel injector 30 is distorted by coking, for example, using multiple glow plugs 28 at multiple locations within combustion chamber 22 can improve the likelihood that the injected fuel impinges on at least one glow plug 28.

Glow plugs 28 are also connected to a power source capable of delivering electric current to the external ends of glow plugs 28, allowing for the electrically-resistive heating of glow plugs 28. In examples where torch igniter 10 contains multiple glow plugs 28, they can be connected to more than one power source or may be connected in series, parallel, or a combination of arrangements to a single power source. Generally, glow plugs 28 are formed of a material capable of being resistively heated. For example, glow plugs 28 can be formed of a ceramic material, such as silicon nitride.

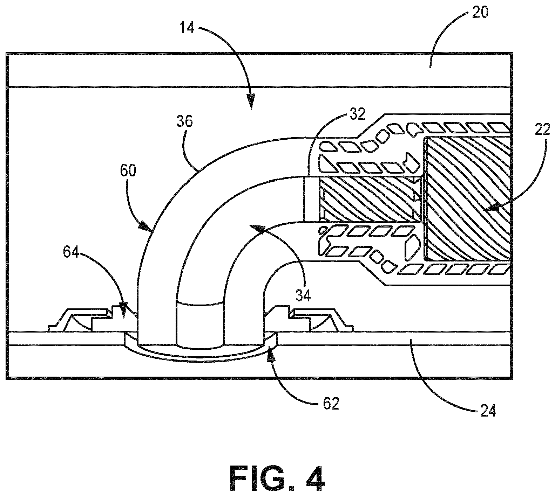

FIG. 4 is a cross-sectional view of tip 14 of torch igniter 10. Tip 14 consists of elbow 60, igniter wall 32, structural wall 36, and outlet passage 34. Tip 14 is mounted to liner 24 at liner opening 62 and is secured within liner opening 62 by liner seal 64. Liner seal 64 can consist of any suitable seal, such as floating seal collars. Elbow 60 can be cooled by the use of cooling channels within torch igniter 10. In the depicted example, elbow 60 turns approximately 90° between combustion chamber 22 of torch igniter 10 and liner 24 of combustor 26. However, it should be understood that the angle of elbow 60 can be varied to accommodate space constraints within high pressure case 20. Most generally, elbow 60 has a shape and orientation suitable to redirect igniter flow from igniter flow direction 40 into combustor 26 and in some embodiments towards combustor flow direction 38.

The internal volume of a torch igniter mounted external to the high pressure case of a combustor experiences much higher pressure and temperatures than the external surface of the torch igniter. This can cause stress on the torch igniter, particularly on the igniter wall and structural wall, and can increase the risk of rupture or other mechanical failure. Mounting a torch igniter within the high pressure case is therefore desirable to avoid strain on the structural components of the torch igniter. Situating the combustion chamber internally also allows for containment within the high pressure case if the torch igniter ruptures. A torch igniter which is capable of intaking air in a reverse direction with respect to airflow through the combustor section allows for greater flexibility in positioning the torch igniter within the high pressure case.

Many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A combustor of a gas turbine engine oriented about an engine axis, the combustor comprising:
a combustor case (20) extending along a primary combustor centerline to convey compressed airflow from a compressor to a turbine section; and
a torch igniter (10) situated within the combustor case, the torch igniter comprising:
a combustion chamber (22) oriented about a torch igniter axis, the combustion chamber having axially upstream and downstream ends defining a flow direction through the combustion chamber with respect to the torch igniter axis;
a cap (18) defining the axially upstream end of the combustion chamber with respect to the torch igniter axis, wherein the cap is configured to receive at least one surface igniter and at least one fuel injector and is configured to intake air in a reverse flow direction with respect to airflow through the combustor;
a tip (14) defining the axially downstream end of the combustion chamber with respect to the torch igniter axis;
an annular igniter wall (32) extending along and surrounding the torch igniter axis from the cap to the tip and defining a radial extent of the combustion chamber;
a structural wall (36) coaxial with and surrounding the igniter wall; and
an outlet passage (34) defined by the igniter wall within the tip, wherein the outlet passage is fluidly connected to the combustion chamber;
wherein the structural wall and the igniter wall are configured for a pressure level within the combustor case of the combustor during operation of the combustor,
the combustor, further comprising a combustor liner (24) disposed within the combustor case to define a main combustor zone and a fuel nozzle (27) situated at an upstream end of the combustor liner, relative to the primary combustor centerline; wherein the torch igniter (10) is situated such that the tip (14) is mounted through the combustor liner, the cap (18) is axially downstream of the tip with respect to the primary combustor centerline, the tip is axially downstream of the fuel nozzle with respect to the primary combustor centerline, and the torch igniter is axially downstream of the fuel nozzle of the combustor with respect to the primary combustor centerline and is disposed radially between the combustor liner and the combustor case.

2. The combustor of claim 1,
wherein the tip (14) comprises an elbow between the combustion chamber and the combustor liner, and preferably wherein the elbow turns 90 degrees from the combustion chamber to the combustor liner.

3. The combustor of claim 1 or 2,
further comprising a fuel injector (30) which extends through an opening of the combustor case.

4. The combustor of claim 3,
wherein a flange (44) is connected to the combustor case and secures the fuel injector within the opening and to the combustor case.

5. The combustor of any of claims 1-4,
wherein the torch igniter axis is parallel to the primary combustor centerline and the engine axis.

6. The combustor of any of claims 1-5,
wherein the cap (18) is configured to receive at least two surface igniters.

7. The combustor of any of claims 1-6,
wherein the torch igniter axis is parallel to the combustor case.

8. The combustor of any of claims 1-7,
further comprising a liner seal (64) between the tip and the combustor liner, and preferably wherein the liner seal is a floating seal collar.

## Patentansprüche

1. Brennkammer einer Gasturbine, die um eine Turbinenachse ausgerichtet ist, wobei die Brennkammer umfasst:
ein Brennkammergehäuse (20), das sich entlang einer Primärbrennkammermittellinie erstreckt, um einen verdichteten Luftstrom von einem Verdichter zu einem Turbinenabschnitt zu befördern; und
einen Brennerzünder (10), der innerhalb des Brennkammergehäuses gelegen ist, wobei der Brennerzünder umfasst:
eine Verbrennungskammer (22), die um eine Brennerzünderachse ausgerichtet ist, wobei die Verbrennungskammer ein axial stromaufwärtiges und stromabwärtiges Ende aufweist, die eine Strömungsrichtung durch die Verbrennungskammer in Bezug auf die Brennerzünderachse definieren;
eine Kappe (18), die das axial stromaufwärtige Ende der Verbrennungskammer in Bezug auf die Brennerzünderachse definiert, wobei die Kappe dazu konfiguriert ist, mindestens einen Oberflächenzünder und mindestens einen Brennstoffinjektor aufzunehmen, und dazu konfiguriert ist, Luft in einer umgekehrten Strömungsrichtung in Bezug auf den Luftstrom durch die Verbrennungskammer anzusaugen;
eine Spitze (14), die das axial stromabwärtige Ende der Verbrennungskammer in Bezug auf die Brennerzünderachse definiert;
eine ringförmige Zünderwand (32), die sich entlang der Brennerzünderachse von der Kappe bis zu der Spitze erstreckt und diese umgibt und eine radiale Erstreckung der Verbrennungskammer definiert;
eine strukturelle Wand (36), die koaxial mit der Zünderwand ist und diese umgibt; und
einen Auslasskanal (34), der innerhalb der Spitze durch die Zünderwand definiert ist, wobei der Auslasskanal in Fluidverbindung mit der Verbrennungskammer steht;
wobei die strukturelle Wand und die Zünderwand für einen Druckpegel innerhalb des Brennkammergehäuses der Brennkammer während des Betriebs der Brennkammer konfiguriert sind, wobei die Brennkammer ferner eine Brennkammerauskleidung (24), die innerhalb des Brennkammergehäuses angeordnet ist, um eine Hauptbrennkammerzone zu definieren, und eine Brennstoffdüse (27) umfasst, die an einem stromaufwärtigen Ende der Brennkammerauskleidung relativ zur Primärbrennkammermittellinie gelegen ist; wobei der Brennerzünder (10) so gelegen ist, dass die Spitze (14) durch die Brennkammerauskleidung hindurch montiert ist, die Kappe (18) in Bezug auf die Primärbrennkammermittellinie axial stromabwärts der Spitze liegt und der Brennerzünder in Bezug auf die Primärbrennkammermittellinie axial stromabwärts der Brennstoffdüse der Brennkammer gelegen ist und radial zwischen der Brennkammerauskleidung und dem Brennkammergehäuse angeordnet ist.

2. Brennkammer nach Anspruch 1, wobei die Spitze (14) ein Kniestück zwischen der Verbrennungskammer und der Brennkammerauskleidung umfasst, und wobei sich das Kniestück vorzugsweise um 90 Grad von der Verbrennungskammer zu der Brennkammerauskleidung wendet.

3. Brennkammer nach Anspruch 1 oder 2, ferner umfassend einen Brennstoffinjektor (30), der sich durch eine Öffnung des Brennkammergehäuses erstreckt.

4. Brennkammer nach Anspruch 3, wobei ein Flansch (44) mit dem Brennkammergehäuse verbunden ist und den Brennstoffinjektor innerhalb der Öffnung und an dem Brennkammergehäuse befestigt.

5. Brennkammer nach einem der Ansprüche 1-4, wobei die Brennerzünderachse parallel zu der Primärbrennkammermittellinie und zu der Turbinenachse verläuft.

6. Brennkammer nach einem der Ansprüche 1-5, wobei die Kappe (18) dazu konfiguriert ist, mindestens zwei Oberflächenzünder aufzunehmen.

7. Brennkammer nach einem der Ansprüche 1-6, wobei die Brennerzünderachse parallel zu dem Brennkammergehäuse verläuft.

8. Brennkammer nach einem der Ansprüche 1-7, ferner umfassend eine Auskleidungsdichtung (64) zwischen der Spitze und der Brennkammerauskleidung, und wobei die Auskleidungsdichtung vorzugsweise ein schwimmender Dichtungskragen ist.

## Revendications

1. Chambre de combustion d'un moteur de turbine à gaz orientée autour d'un axe de moteur, la chambre de combustion comprenant :
un boîtier de chambre de combustion (20) s'étendant le long d'une ligne centrale principale de chambre de combustion pour acheminer un écoulement d'air comprimé d'un compresseur à une section de turbine ; et
un allumeur de torche (10) situé à l'intérieur du boîtier de chambre de combustion, l'allumeur de torche comprenant :
une chambre de combustion (22) orientée autour d'un axe d'allumeur de torche, la chambre de combustion ayant des extrémités axialement amont et aval définissant une direction d'écoulement à travers la chambre de combustion par rapport à l'axe d'allumeur de torche ;
un capuchon (18) définissant l'extrémité axialement amont de la chambre de combustion par rapport à l'axe d'allumeur de torche, dans laquelle le capuchon est configuré pour recevoir au moins un allumeur de surface et au moins un injecteur de carburant et est configuré pour aspirer de l'air dans une direction d'écoulement inverse par rapport à l'écoulement d'air à travers la chambre de combustion ;
une pointe (14) définissant l'extrémité axialement aval de la chambre de combustion par rapport à l'axe d'allumeur de torche ; une paroi d'allumeur annulaire (32) s'étendant le long et entourant l'axe d'allumeur de torche à partir du capuchon vers la pointe et définissant une étendue radiale de la chambre de combustion ;
une paroi structurelle (36) coaxiale avec et entourant la paroi d'allumeur ; et
un passage de sortie (34) défini par la paroi d'allumeur à l'intérieur de la pointe, dans laquelle le passage de sortie est connecté fluidiquement à la chambre de combustion ;
dans laquelle la paroi structurelle et la paroi d'allumeur sont configurées pour un niveau de pression à l'intérieur du boîtier de chambre de combustion de la chambre de combustion pendant le fonctionnement de la chambre de combustion, la chambre de combustion comprenant en outre un revêtement de chambre de combustion (24) disposé à l'intérieur du boîtier de chambre de combustion pour définir une zone de chambre de combustion principale et une buse de carburant (27) située au niveau d'une extrémité amont du revêtement de chambre de combustion, par rapport à la ligne centrale principale de chambre de combustion ; dans laquelle l'allumeur de torche (10) est situé de sorte que la pointe (14) est montée à travers le revêtement de chambre de combustion, le capuchon (18) est axialement en aval de la pointe par rapport à la ligne centrale principale de chambre de combustion, la pointe est axialement en aval de la buse de carburant par rapport à la ligne centrale principale de chambre de combustion, et l'allumeur de torche est axialement en aval de la buse de carburant de la chambre de combustion par rapport à la ligne centrale principale de chambre de combustion et est disposé radialement entre le revêtement de chambre de combustion et le boîtier de chambre de combustion.

2. Chambre de combustion selon la revendication 1, dans laquelle la pointe (14) comprend un coude entre la chambre de combustion et le revêtement de chambre de combustion, et de préférence dans laquelle le coude tourne à 90 degrés à partir de la chambre de combustion vers le revêtement de chambre de combustion.

3. Chambre de combustion selon la revendication 1 ou 2, comprenant en outre un injecteur de carburant (30) qui s'étend à travers une ouverture du boîtier de chambre de combustion.

4. Chambre de combustion selon la revendication 3, dans laquelle une bride (44) est connectée au boîtier de chambre de combustion et fixe l'injecteur de carburant à l'intérieur de l'ouverture et au boîtier de chambre de combustion.

5. Chambre de combustion selon l'une quelconque des revendications 1 à 4, dans laquelle l'axe d'allumeur de torche est parallèle à la ligne centrale principale de chambre de combustion et à l'axe de moteur.

6. Chambre de combustion selon l'une quelconque des revendications 1 à 5, dans laquelle le capuchon (18) est configuré pour recevoir au moins deux allumeurs de surface.

7. Chambre de combustion selon l'une quelconque des revendications 1 à 6, dans laquelle l'axe d'allumeur de torche est parallèle au boîtier de chambre de combustion.

8. Chambre de combustion selon l'une quelconque des revendications 1 à 7, comprenant en outre un joint de revêtement (64) entre la pointe et le revêtement de chambre de combustion, et de préférence dans laquelle le joint de revêtement est un collier d'étanchéité flottant.
